Europäisches Patentamt

(19) European Patent Office

Office européen des brevets

(11) **EP 0 881 353 B1**

(12) **FASCICULE DE BREVET EUROPEEN**

(45) Date de publication et mention
de la délivrance du brevet:
**25.02.2004 Bulletin 2004/09**

(51) Int Cl.⁷: **E21B 33/13**

(21) Numéro de dépôt: **98401091.8**

(22) Date de dépôt: **05.05.1998**

(54) **Méthode et matériau pour la cimentation de puits**

Verfahren und Zusammensetzung zur Zementierung von Bohrlöcher

Process and material for well cementing

(84) Etats contractants désignés:
**DE DK GB IT**

(30) Priorité: **28.05.1997 FR 9707208**

(43) Date de publication de la demande:
**02.12.1998 Bulletin 1998/49**

(73) Titulaire: **Institut Français du Pétrole
92852 Rueil-Malmaison Cedex (FR)**

(72) Inventeurs:
• **Noik, Christine
78230 le Pecq (FR)**

• **Rivereau, Alain
92500 Rueil Malmaison (FR)**

(56) Documents cités:
CA-A- 1 247 352     US-A- 2 796 934
US-A- 3 776 311     US-A- 4 694 905

• DATABASE WPI Week 9746 Derwent
Publications Ltd., London, GB; AN 97-501376
XP002056607 & RU 2 078 091 C (TOKEM STOCK
CO)
• DATABASE WPI Week 8428 Derwent
Publications Ltd., London, GB; AN 84-175347
XP002056608 & SU 1 051 230 A (UKR NAT GAS
RES INS)

**Description**

L'objet de la présente invention concerne le domaine des cimentations de tubes dans des trous forés dans le sous-sol, que ce soit pour l'exploration ou l'exploitation pétrolière, ou pour des programmes de géothermie.

Le domaine de la présente invention ne se limite pas aux cimentations primaires, mais peut être avantageusement utilisée pour les cimentations complémentaires ou de réparation. L'invention peut être avantageusement appliquée dans les puits où l'espace annulaire entre le tube et le trou est étroit, c'est à dire le cas des forages dit « slim-hole ».

Les opérations de cimentations mettent classiquement en oeuvre des formulations de laitiers à base de ciment hydraulique et complétées avec d'autres additifs. Il est connu que les conditions de haute température et de haute pression sont très difficiles pour la réussite des opérations de cimentation car, notamment la rhéologie de tels laitiers est difficilement contrôlable, ou le réglage du temps de prise très délicat. On a déjà proposé des systèmes alternatifs de laitiers de cimentation à base de résine. thermodurcissable, mais aucune des solutions proposées ne propose la formulation selon la présente invention.

CA 1 247 352 A décrit une méthode de cimentation dans laquelle on injecte un matériau liquide comportant des "furan resins" obtenues par réaction d'alcool furfurylique avec de l'urée, formaldehyde ou phénols.

Ainsi, la présente invention concerne une méthode de cimentation dans un puits foré dans le sol, dans laquelle on injecte, à partir de la surface, un matériau liquide comportant de la résine phénol-formol. Selon l'invention, on effectue les étapes suivantes :

- on modifie la résine par une quantité déterminée d'alcool furfurylique, de façon à obtenir un temps de prise dudit matériau compatible avec le temps d'injection et les conditions de fond de puits, notamment la pression et la température,
- on ajoute une quantité de charge minérale inerte vis-à-vis de la résine, de façon à obtenir une viscosité déterminée dudit matériau pendant l'injection.

Dans la méthode, on peut utiliser un mélange de charges inertes de granulométries comprise entre 0,01 et 100 µm, la compacité à sec dudit mélange étant optimisée.

L'invention concerne également un matériau thermodurcissable de cimentation dans un puits foré dans le sol comportant de la résine phénol-formol. La résine est modifiée par une quantité d'alcool furfurylique et comporte au moins une proportion d'une charge granulaire inerte destinée à stabiliser la viscosité dudit matériau liquide, en fonction de la température. Les charges sont dites « inertes », selon la présente invention, car elles n'ont pas de réactivité chimiques par rapport aux systèmes de résines. Cependant, ces charges inertes peuvent posséder un certain caractère hydrophile qui les rend réactives vis-à-vis de l'eau, mais sans former un réseau aboutissant à un matériau solide, comme celui qui serait formé par des particules de ciments.

La résine peut être de la résine phénol-formaldéhyde de type résol.

La charge peut être choisie dans le groupe constitué par la fumée de silice, la silice, la microsilice, le carbonate de calcium, ou leur mélange. Certaines de ces charges peuvent former des gels avec l'eau, mais pas de matrice solide.

Le matériau peut comporter de la microsilice dans une teneur comprise entre 0,5 et 2% en poids.

Le matériau peut comporter de la fumée de silice ou du $CaCO_3$ dans une teneur comprise entre 10 et 50% en poids.

Un des problèmes des résines phénoliques est la production d'eau lors de la condensation. Cette eau peut introduire de l'anisotropie dans le réseau de la matrice et provoquer des pertes de comportement mécanique après la solidification.

Pour diminuer la quantité d'eau, il est ici envisagé d'utiliser un solvant réactif, c'est à dire un solvant qui rentre directement dans le bilan réactionnel. Ainsi, dans la présente invention, l'alcool furfurylique remplace, en totalité ou en partie, l'eau comme solvant principal de la résine phénolique.

Ainsi, lorsque nous avons en présence du formaldéhyde et du phénol avec de l'alcool furfurylique, il est possible d'obtenir des enchevêtrements plus complexes modifiant la réactivité du système résine. Le contrôle du temps de prise peut donc se faire en faisant varier le taux d'alcool furfurylique.

L'invention sera mieux comprise et ses avantages apparaîtront plus nettement à la description des essais suivants, illustrés par les figures ci-annexées, parmi lesquelles :

- La figure 1 donne le temps de prise en fonction de la température,
- La figure 2 donne les rhéogrammes d'une formulation avec ou sans charge,
- La figure 3 donne en comparaison les rhéogrammes de formulations comportant des charges différentes.

Les résines testées sont définies ci-après, par leur nom de marque ou numéro appartenant à la société BORDEN, ainsi que par leur composition donnée par le fabricant complétée par d'autres mesures. Il s'agit de résines phénoliques, de préférence des résines phénol-formol, en particulier des résines phénol- formaldéhyde de type résol.

La teneur en eau résiduelle des résines solides est déterminée par Analyse Thermique Différentielle ATG. La quantité d'eau du produit initial est mesurée par la méthode Karl Fischer ou par distillation azéotropique. De même, les concentrations de phénol libre et d'alcool furfurylique sont déterminées après extraction au chloroforme et séparation par chromatographie.

Tableau 1

| Résines | BORDEN 5002 | BORDEN 5004 |
|---|---|---|
| Viscosité à 25°C (Pa.s) | 0,07 | 0,021 |
| Densité à 20°C | 1.19 | 1.16 |
| pH à 20°C | 7.95 | 8.70 |
| Matières sèches après 2h. à 150°C à 250°C par ATG | 62% 36% | 38% 62% |
| Teneur en eau % (valeur fournie) dosée par Karl-Fischer | 17% 19-23% | 9% 12% |
| Teneur en phénol libre dosée par extraction ATG | - 5,3% | - 4.7% |
| Teneur en alcool furfurylique dosée par chromatographie | - | 38% |

On teste également une résine 5005 (BORDEN) qui se différencie principalement de la résine 5004 par une teneur en alcool furfurylique d'environ 50%.

Modes opératoires :

Pour la préparation des formulations, on a utilisé un agitateur à palette de marque RAYNERI. Avec ce type d'appareil, la vitesse d'agitation a été fixée à 500 tours/min. pendant 30 minutes environ.

Pour les formulations contenant des charges minérales, l'agitation est réalisée avec un mixeur de la marque WARING pendant 5 minutes.

Mesure du temps de prise :

Le temps de prise des résines est déterminé suivant la technique de détermination du temps de pompabilité.

Le temps de pompabilité est déterminé avec un consistomètre suivant un protocole défini par les normes de cimentation pétrolières API 10. Cet appareil se compose principalement d'un récipient cylindrique, contenant le matériau, équipé d'une palette d'agitateur stationnaire. Le tout est plongé dans une cellule pressurisée et thermostatée. Le bol tourne à une vitesse de 150 tr/min., l'agitateur est solidaire d'un ressort calibré et d'un potentiomètre qui permettent la mesure du couple exercé sur la palette par le ciment. Le ressort est étalonné périodiquement avec un équipement de calibration à poids. C'est la mesure du couple qui détermine la fin de l'essai.

Dès sa préparation la formulation est mise en place dans le récipient cylindrique. Celui-ci est obturé par un diaphragme souple qui isole la résine de l'huile de pressurisation tout en transmettant la pression. Après l'application d'une pression initiale, le chauffage est mis en route avec une vitesse fixée de montée en température. La pression est réajustée, en fin de mise en température, à la valeur requise pour l'essai.

La mesure du temps de pompabilité prend fin lorsque le couple atteint la limite établie lors de la calibration. C'est le temps écoulé depuis la mise en marche du chauffage qui détermine le temps de pompabilité.

Mesures rhéologiques :

On utilise un viscosimètre de marque HAAKE, associé à une cellule thermostatée. Le principe de fonctionnement de cet appareil est fondé sur la géométrie "cylindres coaxiaux à simple entrefer" ou "à double entrefer".

Le fluide à étudier est placé dans le stator, le cylindre intérieur étant lié au rotor. Les cylindres intérieurs et extérieurs sont pourvus de rainures dans le sens des génératrices, ceci pour éviter le glissement à la paroi. La vitesse de rotation et la mesure du couple sont réalisées sur l'axe du rotor. Le gradient de vitesse, ou taux de déformation à la paroi du cylindre intérieur, est lié à la vitesse de rotation du rotor. La contrainte tangentielle à la paroi est liée au couple résistant mesuré sur l'axe du rotor.

A la loi d'écoulement reliant la contrainte $\tau$ (Pa) au taux de cisaillement $\gamma$ (s$^{-1}$) est associée un modèle mathématique dont les plus courants sont:

Modèle Newtonian: $\tau = \mu\gamma$ avec $\mu$ la viscosité

Modèle d'Oswald: $\tau = K \gamma^n$ avec K indice de consistance et n indice du comportement fluide

Modèle de Bingham : $\tau = \tau_o + \mu y$ avec $\mu$ la viscosité plastique et la $\tau_o$ contrainte seuil

Caractérisation des matériaux :

La prise des résines s'effectue .dans des moules de 7 cm de hauteur et d'un diamètre interne de 2,5 cm. Avant de couler la résine, les moules sont enduits au préalable avec de la graisse et du silicone. Après remplissage avec la résine choisie, les moules sont placés dans une cellule de prise sous température et pression. Les éprouvettes sont ensuite redimensionnées et caractérisées, notamment par mesure de la résistance à la compression et de la perméabilité.

Résistance à la compression $R_c$

La machine de test comporte un plateau inférieur fixe et un plateau supérieur monté sur rotule. La force de compression est appliquée jusqu'à la rupture de l'échantillon cylindrique de section S. La charge maximale appliquée F est mesurée par l'appareil. La résistance à la compression est définie par la relation : $R_c = F / S$. Rc s'exprime en Pascal, F en Newton et la surface S en m$^2$.

Perméabilité

La constante de perméabilité K est évaluée à partir de l'injection d'eau à travers une éprouvette de résine mise sous une pression de confinement de 40 bars. Le système est rendu étanche latéralement par interposition d'une membrane cylindrique enfilée sur les parois de l'éprouvette. La quantité d'eau écoulée est mesurée après quelques heures.

La formule de calcul utilisée est : $K = \frac{\mu QL}{SP}$

avec :

$\mu$ viscosité du fluide en Pa.s,

Q le débit en m$^3$/s,

S la section de l'éprouvette en m$^2$,

P la pression d'eau à l'entrée de l'éprouvette en Pa,

L la longueur de l'éprouvette en m,

K en m$^2$ (1m Darcy = 0,987 10$^{-15}$ m$^2$).

**Essai 1 :**

On mesure le temps de prise en fonction de l'effet de la température, afin de déterminer, si telle quelle, la résine servant de base à la composition de cimentation est compatible avec les exigences de temps de prise communément exigées dans la profession. En général, les temps de prise exigés sont de l'ordre de 3 à 5 heures, en fonction de la profondeur de l'opération de cimentation.

Les résultats sont présentés dans le Tableau 2. Le temps de prise des résines sont appréciés par rapport au temps de pompabilité, tel que défini plus haut.

Tableau 2

| Temps de pompabilité | | | |
|---|---|---|---|
| Température (°C) | BORDEN 5002 | BORDEN 5004 | BORDEN 5005 |
| 80 | 9 heures | >48 heures | >48 heures |
| 100 | 2 heures | >48 heures | >48 heures |
| 120 | 55 minutes | 8,33 heures | >48 heures |

Tableau 2   (suite)

| Temps de pompabilité | | | |
|---|---|---|---|
| **Température (°C)** | **BORDEN 5002** | **BORDEN 5004** | **BORDEN 5005** |
| 140 | <30 minutes | 3 heures | 5 heures |

Les résines modifiées à l'alcool furfurylique ont des temps de prise compatibles avec leur utilisation en tant que composant d'un matériau de cimentation. On note qu'en faisant varier le taux d'alcool furfurylique on peut aisément contrôler le temps de prise compte tenu de la température d'utilisation.

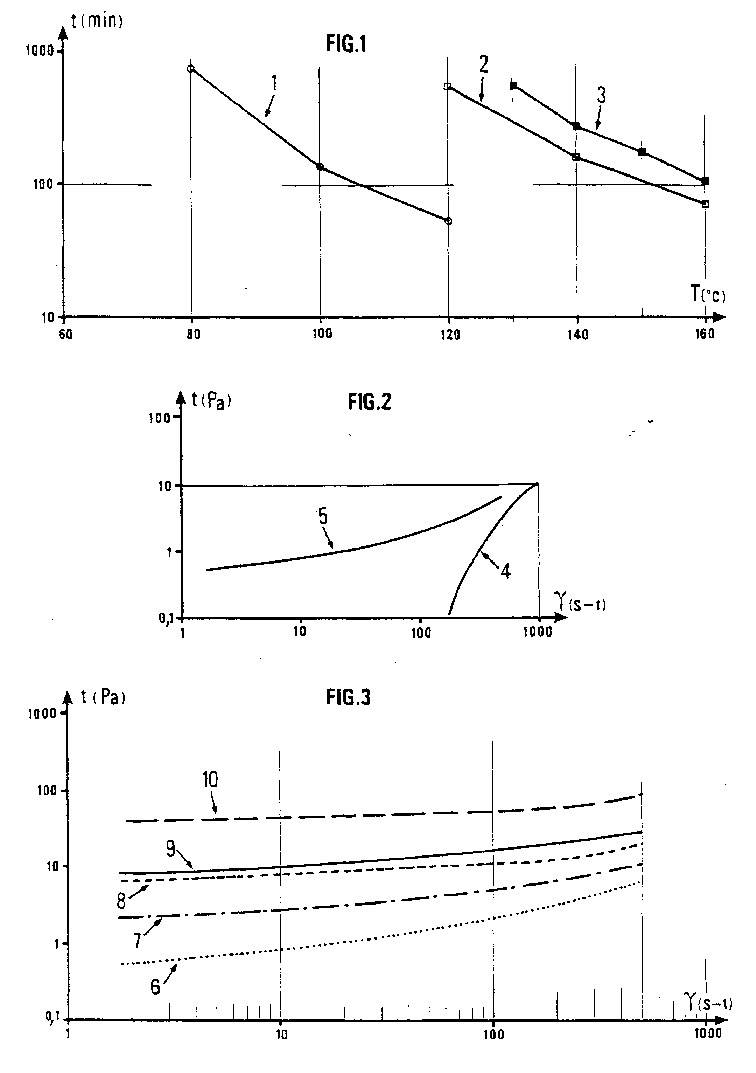

Sur la figure 1, on a représenté les courbes donnant le temps de prise en ordonnée, en fonction de la température en abscisse, pour de la résine 5002 (référence 1), de la résine 5004 avec 78% de $CaCO_3$ et 50% de silice $SiO_2$, en poids par rapport à la résine (référence 2) et de la résine 5005 également avec charge de $CaCO_3$ et sable (référence 3).

On note que le type de charge inerte n'influe pratiquement pas sur le temps de prise.

**Essai 2 : Rhéologie**

La figure 2 illustre le comportement rhéologique de la résine BORDEN 5004, avec ou sans charge, à 90°C. Le rhéogramme donne le cisaillement $\gamma$ ($s^{-1}$) en abscisse et le taux de contrainte $\tau$ (Pa) correspondant en ordonnée. La résine 5004 pure, représentée par la courbe référencée 4, à la température de l'essai (90°C), montre que le taux de contrainte n'est pas mesurable dans la plage de cisaillement étudiée : de 10 à 100 $s^{-1}$. A cette température, les résines deviennent très fluides comparativement aux laitiers de ciment conventionnels.

La courbe 5 référence la résine 5004 additionnée de charge $CaCO_3$ à 33% en poids. Un comportement rhéologique de type Ostwald apparaît avec l'addition d'une certaine quantité de charge. De plus, il a été mesuré que le contrôle de la viscosité d'une résine peut se faire facilement en fonction de la granulométrie de la charge. A pourcentage massique égal, la charge de fumée de silice de granulométrie faible a une influence plus grande sur la viscosité qu'une charge de plus forte granulométrie, comme le $CaCO_3$.

La figure 3 représente des exemples de rhéogrammes de la résine 5004 comportant des charges de nature et de concentration différentes. Les mesures ont été faites à 90°C.

La courbe 6 concerne un mélange contenant 33% de $CaCO_3$.

La courbe 7 concerne un mélange contenant 50% de $CaCO_3$.

La courbe 8 concerne un mélange contenant 25% de fumée de silice.

La courbe 9 concerne un mélange contenant 78% de $CaCO_3$.

La courbe 10 concerne un mélange contenant 50% de fumée de silice.

Définition des charges utilisées en exemple :

Tableau 3

| **Type de charge** | **Silice SiO2** | **Fumée de silice $CaCO_3$** | | **Microsilice** |
|---|---|---|---|---|
| Granulométrie moyenne (μm) | 50 | 2 | 5 | 0,012 |

Influence de la nature de la charge sur le temps de pompabilité de la résine BORDEN 5004 :

Tableau 4

| **Température (°C)** | **5004** | **5004 + 78% de $CaCO_3$+ 50% de $SiO_2$** | **5004 + 25% de $SiO_2$** |
|---|---|---|---|
| 120 | 8h20 | 9h10 | |
| 140 | 3h00 | 2h50 | 3h10 |
| 160 | 1h00 | 1h15 | 1h05 |

Le temps de prise de la résine 5004 est peu sensible à la quantité de charge, ainsi que de la nature de la charge inerte.

**Essai 3 : Résistance à la compression**

L'influence de charges sur les propriétés mécaniques des résines a été étudiée par mesure de la résistance à la compression.

L'effet de charges est observé sur la résine 5002 prise à 80°C après 3 jours. L'ensemble des mesures sont résumées dans le tableau 5. De façon générale, comme pour la viscosité, il y a augmentation de la résistance avec la quantité de particules ajoutée.

De plus, toutes les valeurs de résistance sont nettement plus fortes que celles correspondantes à une formulation classique de laitier de ciment qui se situe autour de 30 à 50 MPa.

Tableau 5

| Mesure de la résistance à la compression Rc (Mpa) Résine BORDEN 5002 + charge | | | | | | | | | |
|---|---|---|---|---|---|---|---|---|---|
| **% de charge** | **0** | **0,5** | **1** | **2** | **5** | **10** | **15** | **20** | **25** |
| Fumée de silice | 60 | | | | 68 | 80 | 57 | 58 | |
| CaCO$_3$ | 60 | | | | 62 | 75 | | 80 | 60 |
| Micro silice | 60 | 70 | 97 | 81 | | | | | |

En particulier, pour la microsilice qui a la granulométrie la plus fine parmi les charges, l'effet de résistance est le plus notable. En effet, le remplissage de la matrice organique est beaucoup plus dense avec les particules fines, ce qui explique l'augmentation de la résistance.

Afin de tenter d'augmenter la valeur de la résistance à la compression, on peut utiliser des mélanges de charges dont les pourcentages sont déterminés en optimisant la compacité à sec du mélange.

Les formulations de charge définies dans le tableau 6 pourraient être avantageusement utilisées.

Tableau 6

| Formulations de charges | | | |
|---|---|---|---|
| **Formulation** | **no 1** | **no 2** | **no 3** |
| Composition | -10% de fumée de silice, -15% de CaCO$_3$, -20% de silice | -10% de fumée de silice, -10% de CaCO$_3$, -10% de silice | -5% de fumée de silice, -12,5% de CaCO$_3$, -12,5% de silice |
| Résistance Rc avec de la résine 5002, à 80°C. | 94 | 98 | 96 |

On voit qu'une optimisation du mélange de charge conduit à des résistances à la compression améliorées.

Relation entre la perméabilité (K), la vitesse du son (V.) dans le matériau et la résistance à la compression (Rc)

Afin d'établir l'effet de charge minérale sur un ensemble de propriétés mécaniques, différentes techniques ont été utilisées. Les résultats de mesures sont regroupés dans les tableaux 7 et 8 suivants:

Tableau 7

| Résine + 25% de fumée de silice | | | | |
|---|---|---|---|---|
| **Résines** | **Densité** | **V. du son (m/s)** | **K (mDarcy)** | **Rc (Mpa)** |
| 5002 (5 j à 120°C) | 1,35 | 2,19 | 9,2 10$^{-3}$ | 96-102 |
| 5004 (5 j à 120°C) | 1,38 | 2,2 | 6,1 10$^{-3}$ | 53-59 |

Tableau 8

| Résine + 50% de CaCO3 | | | | |
|---|---|---|---|---|
| **Résines** | **Densité** | **V. du son (m/s)** | **K (mDarcy)** | **Rc (Mpa)** |
| 5002 (5 j à 120°C) | 1,54 | 2,2 | 1,9 10$^{-2}$ | 126-131 |

Tableau 8   (suite)

| Résine + 50% de CaCO3 | | | | |
|---|---|---|---|---|
| **Résines** | **Densité** | **V. du son (m/s)** | **K (mDarcy)** | **Rc (Mpa)** |
| 5004 (5 j à 120°C) | 1,55 | 2,4 | $4,41\ 10^{-7}$ | 49 |

On peut faire les remarques suivantes sur ces mesures:

- Densité: Les formulations de résines initiales ayant des densités de même ordre de grandeur , autour de 1.1, les valeurs de densité du matériau de cimentation ne dépend que du type et de la quantité de charge ajoutée. Par exemple, selon les tableaux 7 et 8, avec 25% de fumée de silice, on obtient une densité d'environ 1,35-1,38, avec 50% de CaCO3, on obtient une densité d'environ 1,54-1,55.
- Perméabilité: La fumée de silice et le carbonate ayant la même granulométrie, et malgré l'écart important en quantité, les matériaux ont des perméabilités comparables pour chaque type de résine.
- Résistance à la compression: A partir d'une résine modifiée à l'alcool furfurylique, une augmentation de la résistance à la compression est mesurée entre les deux types de charges due à la différence de proportion de charge ajoutée.

**Revendications**

1. Méthode de cimentation dans un puits foré dans le sol, dans laquelle on injecte, à partir de la surface, un matériau liquide comportant de la résine phénol-formol, dans laquelle on effectue les étapes suivantes :

   • on modifie ladite résine par une quantité déterminée d'alcool furfurylique, de façon à contrôler un temps de prise dudit matériau compatible avec le temps d'injection et les conditions de fond de puits, notamment la pression et la température,
   • on ajoute une quantité de charge minérale inerte vis-à-vis de ladite résine, de façon à obtenir une viscosité déterminée dudit matériau pendant l'injection.

2. Méthode de cimentation selon la revendication 1, dans laquelle on utilise un mélange de charges inertes de granulométrie comprise entre 0,01 et 100 µm, la compacité à sec dudit mélange étant optimisée.

3. Matériau thermodurcissable de cimentation dans un puits foré dans le sol comportant de la résine phénol-formol, modifiée par une quantité d'alcool furfurylique, de façon à contrôler le temps de prise dudit matériau, et comportant au moins une proportion d'une charge granulaire inerte destinée à stabiliser la viscosité dudit matériau liquide, en fonction de la température.

4. Matériau selon la revendication 3, dans lequel ladite résine est de la résine phénol-formaldéhyde de type résol.

5. Matériau selon l'une des revendications 3 ou 4, dans lequel ladite charge est choisie dans le groupe constitué par la fumée de silice, la silice, la microsilice, le carbonate de calcium, ou leur mélange.

6. Matériau selon l'une des revendications 3 à 5, dans lequel ladite charge comporte de la microsilice dans une teneur comprise entre 0,5 et 2% en poids.

7. Matériau selon l'une des revendications 3 à 6, dans lequel ladite charge comporte de la fumée de silice ou du $CaCO_3$ dans une teneur comprise entre 10 et 50% en poids.

**Patentansprüche**

1. Verfahren zur Zementierung eines in die Erde gebohrten Loches, in das man von der Oberfläche aus ein flüssiges, ein Phenol-Formol-Harz umfassendes Material einspritzt, in dem man die folgenden Schritte durchführt:

   - man modifiziert das Harz durch eine bestimmte Menge von Furfurylalkohol derart, dass die Abbindezeit des Materials kompatibel mir der Einspritzzeit und den Bohrlochbodenbedingungen, insbesondere dem Druck und der Temperatur geregelt wird,

- man gibt eine mineralische, gegenüber dem Harz inerte Füllmaterialmenge derart zu, dass eine bestimmte Viskosität dieses Materials bei der Einspritzung erhalten wird.

2. Verfahren zur Zementierung nach Anspruch 1, bei dem man ein Gemisch inerter Füllmaterialien mit einer Granulometrie zwischen 0,01 und 100 um verwendet, wobei die Trockendichte des Gemischs optimiert wird.

3. In Wärme in einem in die Erde gebohrten Loch aushärtendes Zementierungsmaterial, das das Phenol-Formol-Harz derart durch eine Menge von Furfurylalkohol modifiziert umfasst, dass die Abbindezeit des Materials geregelt wird, und welches wenigstens einen Anteil eines inerten Granulatfüllmaterials umfasst, das dazu vorgesehen ist, die Viskosität des flüssigen Materials in Abhängigkeit der Temperatur zu stabilisieren.

4. Material nach Anspruch 3, bei dem das Harz das Phenol-Formaldehydharz vom Resoltyp ist.

5. Material nach einem der Ansprüche 3 oder 4, bei dem das Füllmaterial aus der Gruppe gewählt wird, die besteht aus Silicastaub, Silica, Microsilica, Calciumcarbonat oder deren Gemisch.

6. Material nach einem der Ansprüche 3 bis 5, in dem das Füllmaterial das Microsilica in einem Gehalt zwischen 0,5 und 2 Gew.-% enthält.

7. Material nach einem der Ansprüche 3 bis 6, in dem das Füllmaterial den Silicastaub oder $CaCO_3$ in einem Gehalt zwischen 10 und 50 Gew.-% enthält

## Claims

1. A method of cementing in a well drilled in the ground, wherein a liquid material comprising phenol-formol resin is injected from the surface, wherein the following stages are carried out :

- said resin is modified by means of a determined amount of furfuryl alcohol so as to control a setting time for said material compatible with the injection time and the bottomhole conditions, notably the pressure and the temperature,

- an amount of mineral filler unreactive towards said resin is added so as to obtain a determined viscosity of said material during injection.

2. A cementing method as claimed in claim 1, wherein a mixture of unreactive fillers of grain size ranging between 0.01 and 100 $\mu$m is used, the dry compactness of said mixture being optimized.

3. A thermosetting material intended for cementing in a well drilled in the ground, comprising phenol-formol resin modified by means of an amount fo furfuryl alcohol, so as to control the setting time for said material, and comprising at least a proportion of an unreactive granular filler intended to stabilize the viscosity of said liquid material, as a function of the temperature.

4. A material as claimed in claim 3, wherein said resin is a resol type phenolformaldehyde resin.

5. A material as claimed in any one of claims 3 or 4, wherein said filler is selected from the group consisting of silica smoke, silica, microsilica, calcium carbonate or a mixture thereof.

6. A material as claimed in any one of claims 3 to 5, wherein said filler has a microsilica content ranging between 0.5 and 2 % by weight.

7. A material as claimed in any one of claims 3 to 6, wherein said filler has a silica smoke or $CaCO_3$ content ranging between 10 and 50 % by weight.

FIG.1

FIG.2

FIG.3